# EUROPÄISCHE PATENTSCHRIFT

(11) **EP 1 116 678 B1**
(45) Veröffentlichungstag und Bekanntmachung des Hinweises auf die Patenterteilung: **27.04.2005**
(21) Anmeldenummer: 00100462.1
(22) Anmeldetag: 11.01.2000
(51) Int. Cl.: B65G 51/04, B23P 19/00

(54) **Handhabungsverfahren zum positionsgenauen Transportieren eines Werkstückes**
Handlings method for transferring a workpiece by keeping it into an exact orientation
Méthode de manutention pour transporter des pièces à usiner en les maintenant dans leur position éxacte

(43) Veröffentlichungstag der Anmeldung: 18.07.2001
(73) Patentinhaber: Schindler, Peter, D-97631 Bad Königshofen (DE)
(72) Erfinder: Schindler, Peter, D-97631 Bad Königshofen (DE)
(74) Vertreter: Buchau, Erhard, Dipl.-Ing.

(56) Entgegenhaltungen:
- EP-A- 0 803 452
- EP-A- 0 892 374
- WO-A-99/03071
- DE-C- 4 219 190
- US-A- 4 583 884

## Beschreibung

Die Erfindung bezieht sich auf ein Handhabungsverfahren zum positionsgenauen Transportieren eines Werkstücks, vorzugsweise eines Werkstück-Kleinteiles, wie einer Schraube, Scheibe, Mutter oder dergl., von einer Übernahme-Station in Transportrichtung über einen Transportweg zu einer Übergabe-Station bzw. umgekehrt, mit pneumatischer Förderung durch ein Rohrsystem mittels Druck- oder Saugbeaufschlagung eines Werkstückträgers, welcher in einer Übernahme-Position, bei der er sich im Eingriffsbereich der Übernahme-Station des Rohrsystems befindet, quer zur Transportrichtung mit wenigstens einem Werkstück beladen wird, und von welchem in einer Übergabe-Position, in welcher der Werkstückträger sich im Eingriffsbereich der Übergabe-Station des Rohrsystems befindet, das wenigstens eine Werkstück entnommen und einer Verarheitungs-Station zugeführt wird, gemäß Oberbegriff des Anspruchs 1.

Ein wichtiger Teilbereich in der industriellen Produktionstechnik ist die Handhabung von Werkstücken. Unter Handhabung sind alle Vorgänge zu verstehen, die dem Erzeugen oder vorübergehenden Aufrechterhalten einer gewollten Orientierung und gegebenenfalls einer Position von Stückgütern dienen, ohne eine beabsichtigte stoffliche Veränderung an ihnen durchzuführen. Ein Handhabungsverfahren nach dem eingangs zitierten Gattungsbegriff ist bereits bekannt durch die DE-C-42 19 190. Bei der darin beschriebenen pneumatischen Fördereinrichtung hat die Rohrleitung den üblichen Rundquerschnitt. Die Werkstücke, insbesondere Kleinteile, können zwar am Werkstückträger lagedefiniert abgelegt werden, jedoch könnte sich letzterer beim Transport durch die Rohrleitung um seine Achse drehen. Es müßten daher in der Übernahme- oder Übergabe-Station besondere Vorkehrungen getroffen werden, damit die Empfangsposition definiert ist. Da der Werkstückträger mittels Druckluft "geschossen" wird, könnten sich außerdem Kleinteile lösen und ins Rohr fallen.

Der Erfindung liegt die Aufgabe zugrunde, ein Handhabungsverfahren der eingangs genannten Art anzugeben, mit dem sich unter Umgehung der geschilderten Schwierigkeiten Werkstücke, insbesondere Werkstück-Kleinteile, über weite Strecken, anpaßbar an hohe Stückzahlen und unterschiedliche Transportwege, automatisch und lagedefiniert, d.h. mit gewollter Orientierung, transportieren lassen. Unter Beibehaltung von Übernahme-Station, Transportweg und Übergabe-Station soll das Handhabungsverfahren darüber hinaus an unterschiedliche Werkstückformen anpaßbar sein.

Erfindungsgemäß wird die gestellte Aufgabe bei einem Handhabungsverfahren gemäß Oberbegriff des Anspruchs 1 gelöst durch die folgenden im Kennzeichen des Anspruchs 1 angegebenen Merkmale:
**a)** der Werkstückträger ist nach Art einer Transportbüchse, jedoch als ein mit seinem Außenprofil vieleckiges Transportschiffchen mit wenigstens einem Fuß- und einem Mittelteil ausgebildet, wobei der Mittelteil mit je einer lateralen Zu-gangs- und Ausgangsöffnung seitlich offen und mit einer internen Werkstück-Haltevorrichtung versehen ist;
**b)** zur Verdrehsicherung des Transportschiffchens während des Übernahme-, Transportund Übergabevorganges ist das Rohrsystem mit seinem Innenprofil an das polygonale Außenprofil des Transportschiffchens angepaßt und in einem ersten Mündungs-bereich mit mindestens einer seitlichen Fensteröffnung, vorzugsweise deren zwei, sowie in einem zweiten Mündungsbereich mit mindestens zwei seitlichen Fensteröffnungen versehen, mit welcher bzw. welchen die lateralen Zugangsöffnungen des Transportschiffchens in dessen Übernahme- oder Übergabe-Position zur Deckung gebracht werden.

Vorteilhafte Weiterbildungen des Handhabungsverfahrens nach der Erfindung sind in den Ansprüchen 2 bis 6 angegeben. - Die mit der Erfindung erzielbaren Vorteile sind vor allem darin zu sehen, daß mit dem Transportschiffchen oder Kleinteileträger eine positionsgenaue Werkstück- Übernahme und Werkstück-Übergabe sowie eine transportgerechte Arretierung des Werkstücks ermöglicht sind. Weiterhin ist vorteilhaft, daß das Transportschiffchen mit unterschiedlichen internen Werkstück-Haltevorrichtungen an unterschiedliche Werkstück-Kleinteile, z.B. unterschiedliche Schrauben- oder Muttern-Typen, anpaßbar ist, wogegen sein Außenprofil, angepaßt an das Innenprofil des Rohrsystems, gleich bleibt. Grundsätzlich wäre es jedoch auch möglich, die interne Werkstück-Haltevorrichtung des Transportschiffchens als sog. Omni-Greifer auszubilden. Je nachdem, mit welcher Orientierung das Werkstück an der Übergabe-Station ankommen soll, kann mit oder ohne Zwischenweiche im Transportweg gearbeitet werden. In der Zwischenweiche werden Front- und Rückseite des Transportschiffchens umgekehrt, so daß letzteres an der Übergabe-Station so ankommt wie es an der Übernahme-Station aufgegeben wurde. Dies ist nicht der einzige Vorteil einer Zwischenweiche: diese kann auch als Verteilungs-Knotenpunkt ausgebildet werden, indem über eine multiple Zwischenweiche dieser aus einer Mehrzahl von ankommenden Rohrabschnitten gleichzeitig oder nacheinander zugeführte Transportschiffchen auf eine Mehrzahl von abgehenden Rohrabschnitten aufgeteilt werden. Wenn auf diese Verteilfunktion kein wert gelegt wird und das Transportschiffchen ohne Zwischenweiche, d.h. von der Übernahme- zur Übergabe-Station direkt über eine Rohrleitung, transportiert wird, dann kann die Orientierung des ankommenden Transportschiffchens durch die Art des Einschleusens im Bereich der Übernahme-Station (oder bei Rückförderung im Bereich der Übergabe-Station) bestimmt werden: normales oder Über-Kopf-Einschleusen.

Zweckmäßigerweise wird das im ersten oder zweiten Mündungsbereich des Rohrsystems ankommende Transportschiffchen durch stoßdämpfende pneumatische und mechanische Mittel abgebremst. Die pneumatischen Mittel umfassen den Aufbau eines Luftpolsters für das jeweils ankommende Transportschiffchen, und die mechanischen Mittel umfassen Prallplatten an der Front- und an der Rückseite des Transportschiffchens. Gemäß einem anderen vorteilhaften Verfahrensschritt wird das im ersten oder zweiten Mündungsbereich des Rohrsystems sich befindende Transportschiffchen vor dem Absenden zunächst in Transportrichtung in eine abgedichtete Sendeposition verschoben und ihm dann die Blasluft zugeführt. Gemäß einem weiteren vorteilhaften Verfahrensschritt erfolgt das Einschieben des Werkstücks in und das Herausschieben aus dem Transportschiffchen so, wie im Anspruch 6 angegeben, d.h. quer zur Transportrichtung in der y-Richtung, wenn man die Transportrichtung als x-Richtung bezeichnet. Damit sind für die Dichtung und die Prallplatten des Transportschiffchens einerseits und die Werkstück-Beladung und -Entladung unterschiedliche Koordinatenrichtungen maßgebend, was die Vielfalt der Konstruktionsmöglichkeiten für das Transportschiffchen und die Schiebevorrichtungen vergrößert.

Gegenstand der Erfindung ist auch ein Handhabungsgerät zur Durchführung des Verfahrens nach einem der Ansprüche 1 bis 6, welchem die gleiche Aufgabenstellung zugrundeliegt wie dem Handhabungsverfahren und welches zur Lösung dieser Aufgabe gemäß Anspruch 7 gekennzeichnet ist durch die folgenden Merkmale:
a) das jeweils eine Übernahme-Station in einem ersten Mündungsbereich und eine Übergabe-Station in einem zweiten Mündungsbereich umfassende und sich zwischen beiden Bereichen erstreckende Rohrsystem weist ein vieleckiges Innenprofil auf und ist in seinem ersten Mündungsbereich mit mindestens einer seitlichen Fensteröffnung sowie in seinem zweiten Mündungsbereich mit mindestens zwei seitlichen Fensteröffnungen versehen,
b) das mit einem vieleckigen Außenprofil an das Innenprofil des Rohrsystems angepaßte Transportschiffchen besteht zumindest aus einem Fuß- und einem Mittelteil, wobei der Mittelteil mit je einer lateralen Zugangs- und Ausgangsöffnung seitlich offen und mit einer internen Werkstück-Haltevorichtung derart ausgebildet ist, daß
   b1) das Transportschiffchen in einer Übernahme-Position, bei der es sich im Eingriffsbereich der Übernahme-Station und im ersten Mündungsbereich des Rohrsystems befin det, mit seiner lateralen Zugangsöffnung zur Deckung bringbar ist mit der seitlichen Fensteröffnung des ersten Mündungsbereiches und so wenigstens ein Werkstück quer zur Transportrichtung des Rohrsystems in das Transportschiffchen einfügbar und in diesem transportgerecht arretierbar ist, bzw.
   b2) das Transportschiffchen in einer Übergabe-Position, bei der es sich im Eingriffsbereich der Übergabe-Station und im zweiten Mündungsbereich des Rohrsystems befindet, mit seiner lateralen Zugangs- und Ausgangsöffnung zur Deckung bringbar ist mit den bei den seitlichen, einander gegenüberliegenden Fensteröffnungen des zweiten Mündungs bereiches und so wenigstens ein Werkstück quer zur Transportrichtung des Rohrsys tems aus dem Transportschiffchen entnehmbar und einer Bearbeitungsstation zuführ bar ist.

Vorteilhafte Weiterbildungen des Handhabungsgerätes nach Anspruch 7 sind in den Ansprüchen 8 bis 10 angegeben. - In bevorzugter Ausführung sind das Innenprofil des Rohrsystems und das daran angepaßte Außenprofil des Transportschiffchens vierkantig, insbesondere im wesentlichen quadratisch. Zu den mit diesem Handhabungsgerät erzielbaren weiteren-Vorteilen wird auf die nachfolgende Beschreibung verwiesen, in welcher unter Bezugnahme auf die beiliegende Zeichnung Aufbau und Wirkungsweise eines Handhabungsgerätes nach der Erfindung sowie das mit diesem durchführbare Handhabungsverfahren anhand mehrerer Ausführungsbeispiele noch näher erläutert werden. In der Zeichnung zeigt in teilweise vereinfachter, schematischer Darstellung:
- **Fig. 1**: ein Handhabungsgerät nach der Erfindung im Aufriß, welches zur Erzeugung eines Werkstück-Flusses zwischen einem Zuführsystem (linker Teil der Fig.) und einer Bearbeitungsstation in Form eines Schraubroboters (rechter Teil der Fig.) eingefügt ist,
- **Fig. 2**: die Einzelheit II der Übernahme-Station nach Fig. 1, vergrößert,
- **Fig. 3**: die Einzelheit III der Übergabe-Station nach Fig. 1, vergrößert,
- **Fig. 4**: eine Variation zu der durch einen Kreis markierten Rohr-Zwischenweiche nach Fig. 1 in Gestalt eine etwas vergrößert dargestellten Drehmoduls als Einzelheit IV,
- **Fig. 5**: ein drittes Ausführungsbeispiel für eine Rohr-Zwischenweiche mit vergrößertem Durchmesser des Drehmoduls als Verteilungs-Knotenpunkt für eine größere Anzahl von Transportschiffchen,
- **Fig. 6**: die Draufsicht auf das Drehmodul nach Fig. 5,
- **Fig. 7**: ein viertes Beispiel für eine Rohr-Zwischenweiche mit einem Schiebe-Modul als Verteilungs-Knotenpunkt
- **Fig. 8**: die Draufsicht auf den Schiebe-Modul nach Fig. 7 im Ausschnitt,
- **Fig. 9**: eine andere Steuerungsmöglichkeit des Schiebe-Moduls nach Fig. 8 mit doppeltem Hub zur paarweisen Beladung und Entladung,
- **Fig. 10**: im Ausschnitt die Momentaufnahme eines Transportschiffchen in einem Rohrstück des Rohrsystems mit eingefügter Schraube als zu transportierendes Werkstück,
- **Fig. 11**: eine Draufsicht auf das Transportschiffchen nach Fig. 10 bei weggebrochenem Kopfteil,
- **Fig. 12**: die Einzelheit XII aus Fig. 11, vergrößert,
- **Fig. 13**: die Einzelheit XIII aus Fig. 10, vergrößert, d.h. die Anordnung und Einspannung der umlaufenden Dichtlippe,
- **Fig. 14**: in einer der Fig. 10 entsprechenden Darstellungsweise die Momentaufnahme eines Transportschiffchens mit eingefügter Schweißmutter in einem Rohrstückdes Rohrsystems, wobei der interne Aufbau des Transportschiffchens in Anpassung an die Schweißmutter etwas geändert ist,
- **Fig. 15**: den Gegenstand nach Fig. 14 in einer um 90° um die Längsachse gedrehten Darstellung,
- **Fig. 16**: im Querschnitt das Vierkantrohr des Rohrsystems nach Fig. 14 mit darin positioniertem Transportschiffchen in "durchsichtiger" Darstellung,
- **Fig. 17**: ein Querschnitt durch das Transportschiffchen nach Fig. 14
- **Fig. 18**: eine pneumatische Steuereinrichtung, von der ein aus dem Zylindergehäuse vorstehendes Kolben-Ende zu sehen ist und die im Mündungsbereich des Rohrsystems an dieses bei einer Übernahme- oder einer Übergabe-Station (wie dargestellt) anschließbar ist, in Stellung "A" des Kolbens, entsprechend der Belade- oder Entlade-Position des am Kolben anliegenden Transportschiffchens,
- **Fig. 19**: den Gegenstand nach Fig. 18, wobei der Kolben in Stellung "B" herausgefahren ist, entsprechend der Absendestellung des am Kolben anliegenden Transportschiffchens,
- **Fig. 20**: einen Schnitt nach der Ebene XX - XX aus Fig. 18, d.h. einen Querschnitt durch das Vierkantrohr des Rohrsystems, durch dessen seitliche Fensteröffnungen und durch das darin befindliche Transportschiffchen, und.
- **Fig. 21**: ein Drehmodul nach Fig. 6, eingesetzt als Verteilungs-Knotenpunkt zwischen einem im linken Teil der Fig. dargestellten Zuführsystem für verschiedenene Werkstück-Kleinteil-Sorten (Sortierteile) und einer Montagestraße (rechter Teil der Fig.).

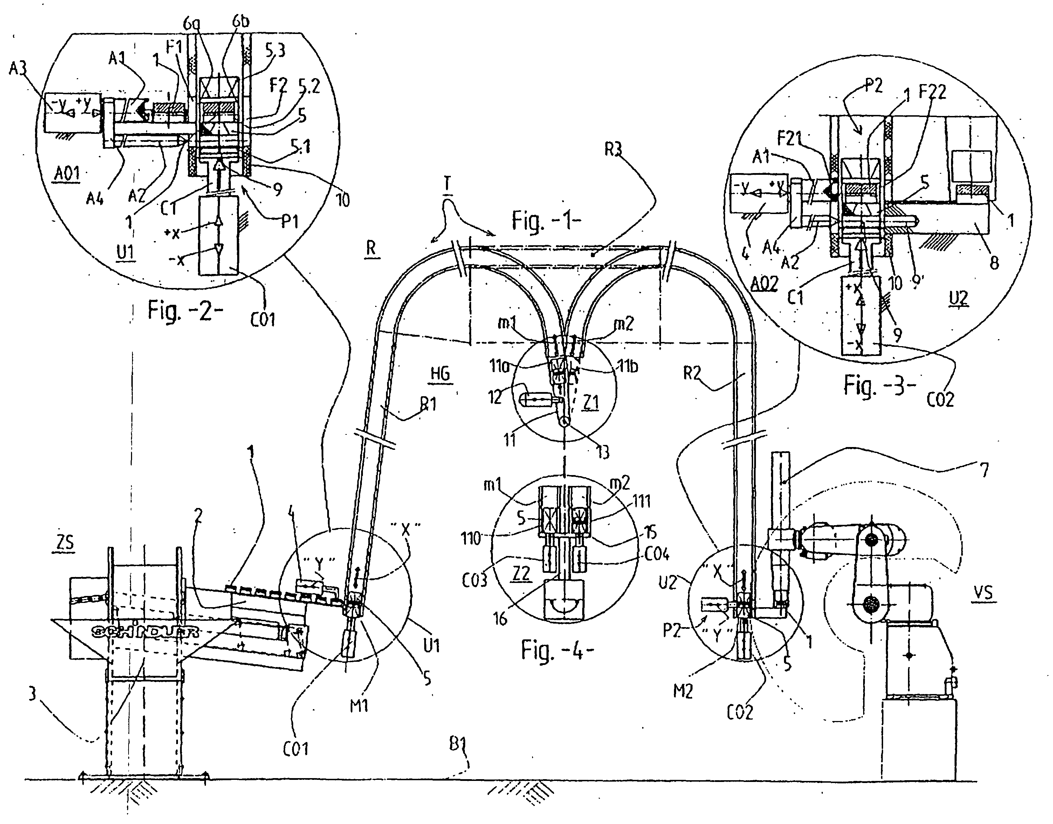

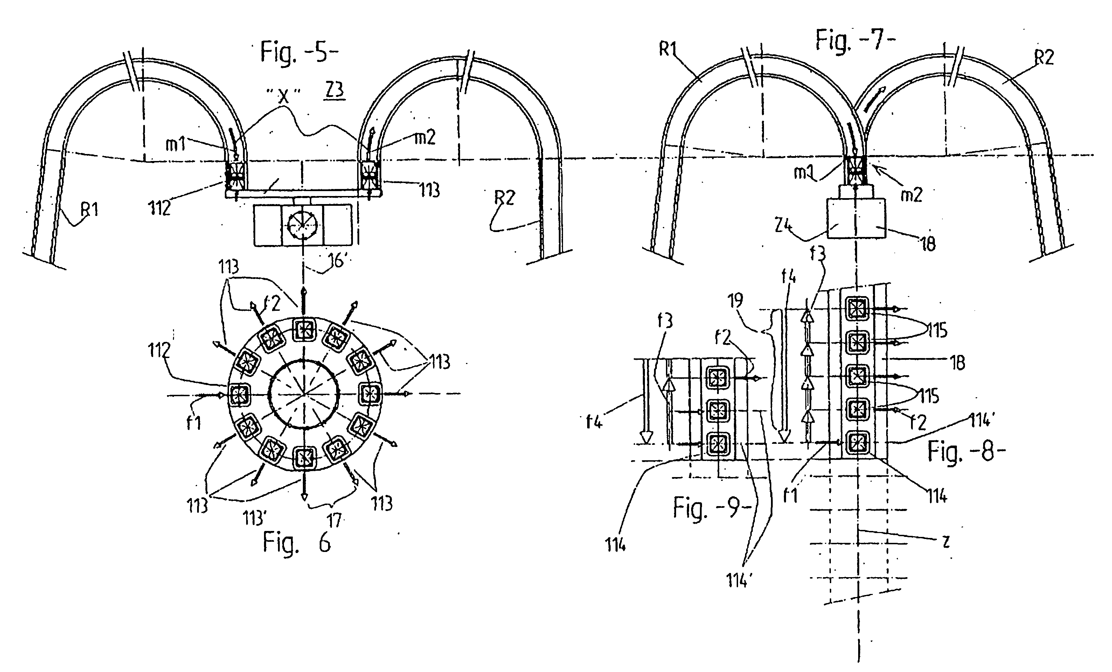

Fig. 1 zeigt die Gesamtansicht eines Handhabungsgerätes HG nach der Erfindung, das auf einem Fundament B1 aufgestellt ist, zum positionsgenauen Transportieren eines Werkstücks 1, vorzugsweise eines Werkstück-Kleinteiles, wie einer Schraube oder einer Mutter, von einer Übernahme-Station Ulüber einen Transportweg T zu einer Übergabe-Station U2.

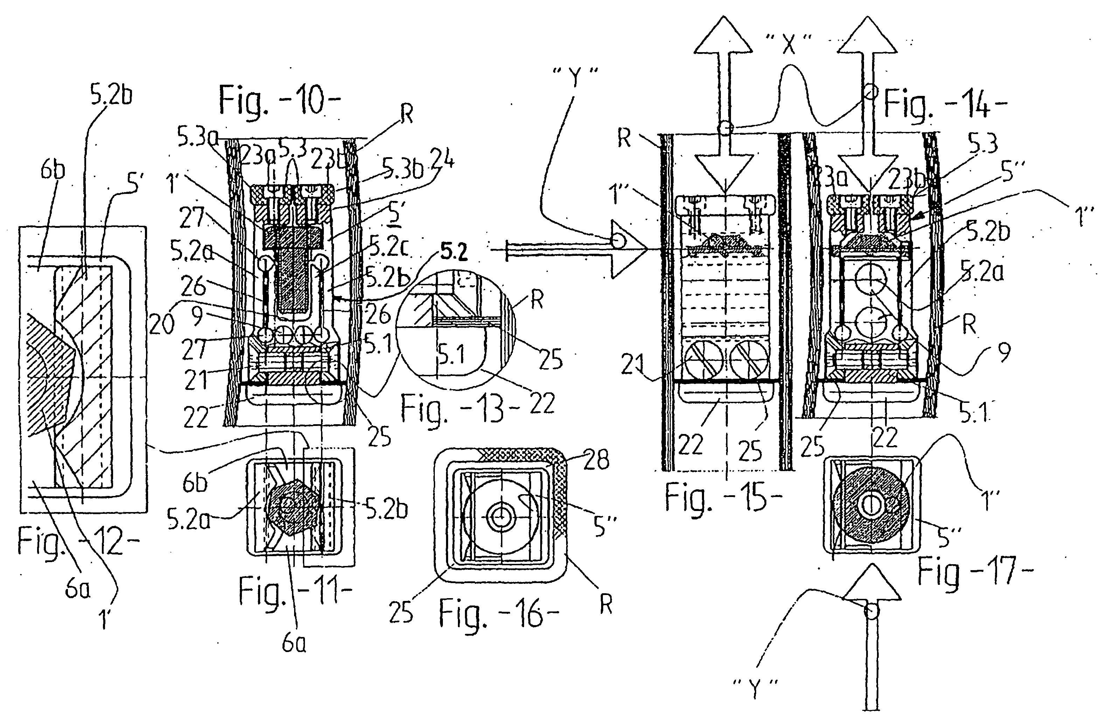

Der Transportweg T wird durch ein Rohrsystem R mit vieleckigem, insbesondere viereckigem Innenprofil gebildet. Zum Rohrsystem R gehört jeweils die Übernahme-Station U1 in einem ersten Mündungsbereich M1 und die Übergabe-Station U2 in einem zweiten Mündungsbereich M2. Das sich zwischen beiden Bereichen M1, M2 erstreckende Rohrsystem ist in seinem ersten Mündungsbereich M1, M2 mit mindestens einer seitlichen Fensteröffnung F1, F2 und in seinem zweiten Mündungsbereich M2 mit mindestens zwei seitlichen Fensteröffnungen F21, F22 versehen. Auch im ersten Mündungsbereich werden bevorzugt zwei Fensteröffnungen F1, F2 vorgesehen, weil auch dort Transportschiffchen nicht nur ein- sondern auch herausgeschoben werden müssen (wenn sie leer in Richtung -x zurückbefördert werden).Die Fensteröffnungen F1, F2 kann man in Fig. 2 sehen.. Im Mündungsbereich M2 der Übergabe-Station U2 sind auch zwei diametral gegenüberliegende Fensteröffnungen F21, F22 im Rohrsystem R vorgesehen (siehe Fig. 3), weil, wie gesagt, zum Herausschieben aus der Rohrmündung diese beiden Fensteröffnungen F21 und F22 erforderlich sind.

In Fig. 1 bis 3 ist als zu transportierendes Werkstück 1 ein Mutter in ihrem Seitenriß bzw. mit ihrem seitlichen Schattenriß dargestellt. Eine Mehrzahl solcher Muttern wird der Ubernahme-Station U1 von einem Zuführsystem ZS über eine schiefe Ebene 2 nacheinander zugeführt. Bei dem nur in seinen Umrissen dargestellten Zuführsystem ZS kann es sich um einen Stufensortierer des Typs "EUROSORT ®" handeln, welcher die Werkstück-Kleinteile 1 aus einem Schüttgut-Bunker 3 entnimmt, in die richtige Orientierung bringt und nacheinander über die schiefe Ebene 2 eines Schwingförderers einer am Ende der schiefen Ebene 2 positionierten Vereinzel- und Greifeinrichtung 4 zufördert. Letztere greift das jeweils dem Mündungsbereich M1 am nächsten liegnde Werkstück 1 und legt es positionsgerecht vor dem Schieber A1 einer Schiebevorrrichtung A01 ab, vergl. Fig. 2. Letztere ist der besseren Übersichtlichkeit wegen in Fig. 1 nicht dargestellt, ist jedoch, so wie in Fig. 2 gezeigt, vor der seitlichen Fensteröffnung F1 und in Flucht y mit dieser montiert, wobei die Vereinzel- und Greifeinrichtung 4 seitlich versetzt zu der Schiebevorrichtung A1 zu denken ist. Letztere schiebt das Werkstück 1 in ein innerhalb der Übernahme-Station U1 und in dem Mundungsbereich M1 in einer Übernahme-Position P 1 befindliches Transportschiffchen oder einen Kleinteile-Träger 5 (vergl. auch Fig. 2). Das Transportschiffchen 5 ist mit einem vieleckigen Außenprofil an das Innenprofil des Rohrsystems angepaßt. Im dargestellten Beispiel hat das Transportschiffchen 5 in Anpassung an das bevorzugt viereckige Innenprofil des Rohrsystems R ein viereckiges Außenprofil. Es besteht zumindest aus einem Fußteil 5.1 und einem Mittelteil 5.2, und vorzugsweise auch noch aus einem Kopfteil 5.3, wobei der Mittelteil 5.2 mit je einer lateralen Zugangs- und Ausgangsöffnung 6a, 6b seitlich offen und mit einer internen (in Fig. 10 bis 17 näher dargestellten) Werkstück-Haltevorichtung derart ausgebildet ist, daß das Transportschiffchen 5 in der Übernahme-Position P1, bei der es sich im Eingriffsbereich der Übernahme-Station U1 und im ersten Mündungsbereich M1 des Rohrsystems R befindet, mit seiner lateralen Zugangsöffnung 6a zur Deckung bringbar ist mit der seitlichen Fensteröffnung F1 und vorzugsweise auch einer zweiten seitlichen Fensteröffnung F2 des ersten Mündungsbereiches M1 und so wenigstens ein Werkstück 1 quer zur Transportrichtung x des Rohrsystems R in das Transportschiffchen 5 einfügbar und in diesem transportgerecht arretierbar ist.

Auf die Ausbildung des Transportschiffchens und seine interne Haltevorrichtung wird weiter unten mit Bezug auf die Fig. 10 bis 17 noch näher eingegangen..

Wie es der rechte Teil der Fig. 1 und Fig. 3 zeigen, ist das Transportschiffchen 5 mit seinem Mittelteil 5.2, d.h. mit seiner lateralen Zugangs- und Ausgangsöffnung 6a, 6b und mit seiner internen Haltevorrichtung, ferner so ausgebildet, daß es in einer Übergabe-Position P2, bei der es sich im Eingriffsbereich der Übergabe-Station U2 und im zweiten Mündungsbereich M2 des Rohrsystems R befindet, mit seiner lateralen Zugangs- und Ausgangsöffnung 6a, 6b zur Deckung bringbar ist mit den beiden, einander gegenüberliegenden seitlichen Fensteröffnungen F21, F22 des zweiten Mündungsbereiches M2 und so jeweils wenigstens ein Werkstück 1 quer zur Transportrichtung x des Rohrsystems R aus dem Transportschiffchen 5 entnehmbar und einer Verbeitungsstation VS zuführbar ist.

Im Beispiel der Fig. 1 ist die Verarbeitungsstation VS ein Sechsachsknickarmroboter mit einem Schrauber 7, der das auf der Plattform 8 zugeschobene Werkstück 1 (Schraube oder Mutter) an die jeweilige Schraubposition bringt. Fig. 3 zeigt, daß die Plattform in einen nicht bezeichneten Rohrausschnitt unterhalb der Fensteröffnung F22 eingepaßt und oberhalb eines Rohr-Flanschringes 10 befestigt ist.

Fig. 2 und 3 zeigen, daß der Übernahme- und der Übergabe-Station U1, U2 je eine Schiebevorrichtung A01, A02 zum Einschieben eines Werkstücks 1 in bzw. Herausschieben aus dem Transportschiffchen 5 zugeordnet sind, wobei der Schieber A1 der Schiebevorrichtung A01 bzw. A02 mit seiner mit dem Werkstück 1 zur Anlage gelangenden Schiebefläche zweckmäßigerweise eine Kontur aufweist, die dem seitlichen Schattenriß des ein- oder auszuschiebenden Werkstücks 1 entspricht.

Die Schiebevorrichtungen A01, A02 weisen jeweils mindestens einen parallel zu ihrem Schieber A1 aus- und einfahrbaren Fixierdorn A2 auf, mit welchem das Transportschiffchen 5 in seiner Übernahme- oder Übergabe-Position P1 bzw. P2 positionsgenau zum Ein- oder Ausschieben des Werkstücks 1 fixierbar ist. Hierzu ist im Mittelteil 5.2 des Transportschiffchens 5 wenigstens eine in Ein- oder Ausschiebrichtung y orientierte Fixierbohrung 9 (vorzugsweise deren zwei) vorgesehen, in welche in der Übernahme-Position P1 (Fig. 2) oder Übergabe-Position P2 (Fig. 3) des Transportschiffchens 5 der Fixierdom A2 der Schiebevorrichtung A01 bzw. A02 einfahrbar bzw. aus der Fixierbohrung 9 wieder ausfahrbar ist. Bei der Übergabe-Station U2 nach Fig. 3 erstreckt sich die Fixierbohrung 9 mit einer Fortsetzung bis in die Plattform 8 hinein. Die Schiebevorrichtungen A01, A02 haben beide ein Gehäuse A3 mit einem internen (nicht dargestellten), z.B. pneumatischen, doppelten Kolben-Zylinder-System, wobei ein Kolben den Fixierdorn A2 betätigt und der andere Kolben (erst nach Fixierung des Transportschiffchens 5 durch den Fixierdorn A2) den Schieber A1 zum Einschieben (Fig. 2) oder Herausschieben (Fig. 3) des Werkstücks 1 betätigt. Der Fixierdorn A2 ist an einer Traverse A4 befestigt, so daß er unterhalb des Schiebers A1 unabhängig von letzterem betätigt werden kann.

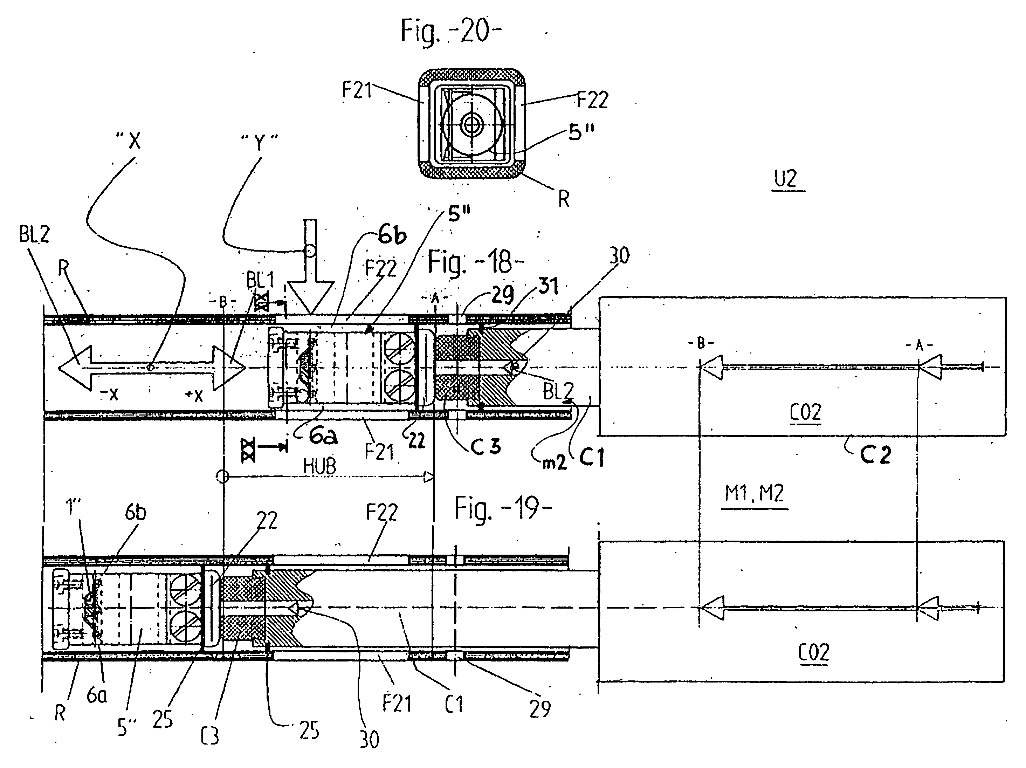

Aus Fig. 2 und 3 erkennt man ferner, hier nur mit ihren Umrissen dargestellt, je eine der Rohrmündung im Übernahme-Bereich U1 und im Übergabe-Bereich U2 zugeordnete, vorzugsweise pneumatische, Steuereinrichtung C01, C02, mit einem Steuer- und Bremskolben C1, welcher im Rohrmündungsbereich M1, M2 längsverschieblich in Richtung ± x hin- und her bewegbar gelagert ist und mit welchem das im Übergabe- oder Übernahme-Bereich ankommende Transportschiffchen 5 abbremsbar, in der jeweiligen Belade- oder Entlade-Position fixierbar sowie zum Senden wegschiebbar und in eine Dichtposition überführbar ist, so daß das Transportschiffchen 5 aus der letztgenannten Position zugeblasen werden kann, d.h. pneumatisch im Rohrsystem beförderbar ist. Auf die Steuereinrichtungen C02, die zu (C01) in Aufbau und Funktion gleichartig ist, wird weiter unten im Zusammenhang mit Fig. 18 bis 20 noch näher eingegangen.

Aus Fig. 1 ist ersichtlich, daß die beiden eingangsseitig an die Übernahme-Station U 1 bzw. ausgangsseitig an die Übergabe-Station U2 angeschlossenen Rohrabschnitte R1, R2 durch eine Rohr-Zwischenweiche Z1 miteinander gekoppelt sind. Strichliert ist angedeutet, daß die beiden Rohrabschnitte R1, R2 auch durch ein Rohrstück R3 direkt miteinander verbunden werden können. In diesem Falle wird das Transportschiffchen 5 direkt über das Rohrsystem R, d.h. ohne Zwischenweiche Z1, von (U1) nach (U2) transportiert, so daß die Innenseite der Startposition des Transportschiffchens 5 und des Werkstücks 1 zur Außenseite der Ankunftsposition und die Außenseite der Startposition zur Innenseite der Ankunftspositon werden. Wenn man dies nicht wünscht, kann man im Bereich der Übernahme-Station U1 das Werkstück 1 über Kopf in das Transportschiffchen 5 eingefügen, so daß im Vergleich zur Startposition bei der Ankunftsposition Innen-und Außenseite des Werkstücks miteinander vertauscht sind und die Ankunftsposition des Werkstücks 1 einer gewünschten Verarbeitungsposition entspricht. Durch die Rohr-Zwischenweiche Z1 wird diese Stirnseitenvertauschung selbsttätig durchgeführt. In Fig. 3 ist die dort gezeigte Ankunfsposition des Transportschiffchens 5 mit der Absendeposition nach Fig. 2 gleich, weil das Transportschiffchen 5 über die Rohr-Zwischenweiche Z1 geführt wurde.

Letztere (siehe Mitte der Fig. 1) ist als Schwenkweiche ausgebildet, bestehend aus einem schwenkbar gelagerten hohlen Aufnahmekörper 11 für das Transportschiffchen 5, der an seinem freien Ende 11 a für das Transportschiffchen 5 durchlässig und an seinem schwenkbar gelagerten Ende 11b für das Transportschiffchen 5 undurchlässig ist. Das freie Ende 11a ist in den beiden Schwenkstellungen P3, P4 einer Übernahme- und einer Übergabe-Position des Aufnahmekörpers 11 abwechselnd an die Mündung m1 eines Übergabe-Rohrabschnitts R1 oder die Mündung m2 eines Übernahme-Rohrabschnitts R2 ankuppelbar. Hierzu ist der Aufnahmekörper 11 mit einem Schwenkantrieb 12 zur Erzeugung einer hin- und hergehenden Schwenkbewegung um die Schwenkachse 13 gekuppelt. Weiterhin sind (nicht näher dargestellte) Mittel zur Zuführung von Blasluft BL zu dem vor die Mündung m2 des Übernahme-Rohrabschnitts R2 verschwenkten, das Transportschiffchen 5 enthaltenden Aufnahmekörper 11 vorgesehen, die dafür sorgen, daß die Blasluft BL nach dem Verschwenken in die Mündung m2 und den anschließenden Rohrabschnitt R2 geleitet wird. Das beladene Transportschiffchen 5 gelangt über die Mündung m1 in den Aufnahmekörper 11 der Zwischenweiche Z1. Der Aufnahmekörper 11 schwenkt sodann von Stellung P3 in Stellung P4, in welcher er an die Rohrmündung m2 angekuppelt ist. Mittels der in der Zwischenweiche Z1 integrierten Mittel wird nun Blasluft BL dem Transportschiffchen 5 zugeblasen und dieses dadurch von (m1) zur Übergabe-Station U2 (Mündungsbereich M2) transportiert. Hier wird das Transportschiffchen 5 mittels der Schiebevorrichtung A02 fixiert und entleert. Das leere Transportschiffchen 5 wird von der Steuereinrichtung C02 nach (m2) zurückgeblasen. Die Zwischenweiche Z1 schwenkt daraufhin ihren Aufnahmekörper 11 von Stellung P4 zurück in Stellung P3, und das leere Transportschiffchen wird zur Übernahme-Station U1 (Mündungsbereich M1) zurückgeblasen, wo es nach Ausschieben mittels der Schiebevorrichtung A01 von der Vereinzel- und Greifvorrichtung 4 abgenommen werden kann.

In Fig. 4 ist eine andere Ausführung Z2 der Rohr-Zwischenweiche dargestellt, wonach die Rohr-Zwischenweiche als Drehmodul ausgebildet ist, bestehend aus.einem Drehteller 15 mit mindestens zwei rohrförmigen Aufnahmekörpern 110, 111, welchen jeweils die Mündung. m1 eines Übergabe-Rohrabschnitts R1 bzw. die Mündung m2 eines Übernahme-Rohrabschnitts R2 zugeordnet ist und welche mit dem Drehteller 15 um dessen Drehachse 16 mit einem schematisch angedeuteten Drehantrieb 14 so verstellbar sind, daß in jeweils einen Aufnahmekörper 110 ein Transportschiffchen 5 aus einem Übergabe-Rohrabschnitt R1 und aus jeweils einem anderen Aufnahmekörper 111 ein Transportschiffchen 5 in einen Übernahme-Rohrabschnitt R2 hineinförderbar sind bzw. umgekehrt. Die an der Unterseite des Drehtellers 15 befestigten pneumatischen Steuereinrichtungen C03, C04 sind gleichartig zu denjenigen (C01, C02) nach Fig. 2 und 3, d.h. sorgen für das Abbremsen, Halten in der jeweiligen Ankunft- oder Absendeposition, Wegschieben, Abdichten und Zublasen des Transportschiffchens 5.

Bei der weiteren Ausführung Z3 einer Rohr-Zwischenweiche nach Fig. 5 und 6 ist diese als Revolver-Drehmodul ausgebildet, bestehend aus einem im Vergleich zum Beispiel nach Fig. 4 vergrößerten Drehteller 15' mit mindestens zwei Aufnahmekörpern 112, 113, welchen jeweils die Mündung m1 eines Übergabe-Rohrabschnitts R1 bzw. die Mündung m2 eines Übernahme-Rohrabschnitts R2 zugeordnet ist und welche mit dem Drehteller 15' um dessen Drehachse 16' so verstellbar sind, daß in jeweils einen Aufnahmekörper 112 ein Transportschiffchen 5 aus einem Übergabe-Rohrabschnitt R1 und aus jeweils einem anderen Aufnahmekörper 113 ein Transportschiffchen 5 in einen Übernahme-Rohrabschnitt 113 hineinförderbar sind bzw. umgekehrt. Der an die Drehachse 16' angekuppelte Drehantrieb ist mit 14' bezeichnet. Fig. 6 zeigt einen Revolver-Drehmodul, mit einer Mehrzahl (im dargestellten Falle 12) von über den Umfang des Drehtellers 15' verteilten Aufnahmekörpern 112, 113 und einer entsprechenden Anzahl von (nicht im einzelnen dargestellten) Mündungen m1, m2 eines oder mehrerer Übergabe-Rohrabschnitte R1 bzw. eines oder mehrerer Übernahme-Rohrabschnitte R2, welch letztere abwechselnd oder gruppenweise abwechselnd den Aufnahmekörpern 112, 113 so zugeordnet sind, daß jeweils ein erster Teil der Aufnahmekörper 112 mit Transportschiffchen 5 beladbar und ein zweiter Teil von Transportschiffchen 113 entladbar ist und nach Drehung des Drehtellers 15'um einen oder mehrere Drehwinkelschritte 17 der zweite Teil beladbar und der erste Teil entladbar ist, u.s.f. Dargestellt in Fig. 6 ist eine Momentaufnahme, wonach der Aufnahmekörper 112, der sich auf Position 112' befindet, gerade beladen wird. Es könen nun schrittweise nacheinander zehn weitere Aufnahmekörper 113 auf Position 112' gemäß Pfeil f1 beladen werden, bevor die Transportschiffchen 5 nacheinander oder gleichzeitig gemäß Pfeilen f2 auf die einzelnen zweiten Rohrabschnitte R2 (von denen nur einer in Fig 5 dargestellt ist) verteilt werden. Es ist auch möglich, die eine Hälfte der Aufnahmekörper 112, 113, also im dargestellten Fall sechs davon, nacheinander oder gleichzeitig zu beladen, dann den Drehteller 15' um 180° zu drehen und die beladenen Aufnahmekörper nacheinander oder gleichzeitig zu entladen, während die andere Hälfte der noch leeren oder schon entladenen Aufnahmekörper wieder beladen wird. Diese Vorgänge spielen sich in umgekehrter Reihenfolge ab, wenn die über (R2) zurückkommenden (leeren) Transportschiffchen 5 uber (R1) zur (hier nicht dargestellen) Übernahme-Station U1 zurückgefördert werden. Die den einzelnen Aufnahmekörpern 112, 113 zugeordneten pneumatische Steuereinrichtungen, die in Fig. 4 mit C03, C04 bezeichnet sind, sind sind in Fig. 5 und 6 zur Vereinfachung nicht dargestellt.

In Fig. 7 bis 9 ist ein viertes Ausführungsbeispiel einer Rohr-Zwischenweiche Z4 dargestellt, bei der in Analogie zur rotatorischen Beladung und Entladung nach Fig. 5 und 6 mit einem Linear-Vorschub und einer Linear-Rückstellung gearbeitet wird. Hierzu sind die Mündungen m l der Übergabe-Rohrabschnitte R1 und die Mündungen m2 der Übemahme-Rohrabschnitte R2 (gezeigt ist in Fig. 7 lediglich je ein Rohrabschnitt R1, R2) in einer Längeflucht nebeneinander liegend angeordnet, und auch die Aufnahmekörper 114, 115 (siehe Fig. 8) sind auf einem Schiebemodul 18 in Längsflucht z nebeneinander liegend angeordnet. Der Schiebemodul 18 ist linear in Richtung der Pfeile f3, f4 hin- und herbeweglich gelagert und mit seinen Aufnahmekörpern 114, 115 abwechselnd oder gruppenweise abwechselnd den Mündungen m1, m2 der Rohrabschnitte R1, R2 so zugeordnet, daß jeweils ein erster Teil 114 der Aufnahmekörper 114, 115 mit Transportschiffchen 5 beladbar und ein zweiter Teil 115 von Transportschiffchen 5 entladbar ist und nach Linearverschiebung des Schiebemoduls 18 um einen Teilungsschritt, z.B. den rückstellenden Teilungsschritt 19 gemäß Pfeil f4, der zweite Teil beladbar und der erste Teil entladbar ist, u.s.f. Dargestellt ist in Fig. 8, daß auf Position 114' gemäß Pfeil f1 jeweils ein Aufnahmekörper 114 beladen wird, wobei dann nach z.B. vier Teilschritten entsprechend Pfeil f3 die Aufnahmekörper 115 gleichzeitig oder nacheinander entladen werden. Gemäß der Variante nach Fig. 9 erfolgt der Linearvorschub in Doppelschritten gemäß Pfeil f3, wobei auf den Positionen 114' jeweils zwei Aufnahmekörper 114 gleichzeitig beladen und auf den nachfolgenden Entladepositionen 115' (von denen in Fig. 9 nur eine dargestellt ist) die Aufnahmekörper nacheinander oder gleichzeitig entladen werden. Der Schiebemodul 18 ist analog zum Drehmodul Z2 oder Z3wieder mit (nicht ersichtlichen) pneumatischen Steuereinrichtungen versehen.

Fig. 10 bis 13 zeigen ein Transportschiffchen 5' vergrößert im Detail, und zwar ein solches, das zu Halterung einer Schraube oder eines Schraubenbolzens 1' (anstelle einer Mutter 1) als Werkstück konfiguriert ist. Gemäß Fig. 10 ist das Transportschiffchen 5' als federnde Spannzange zum form- und kraftschlüssigen Ein- bzw. Ausclipsen des jeweiligen Werkstücks 1' ausgebildet, mit zwei federelastisch deformierbaren Zangenschenkeln 5.2a, 5.2b, die mit ihren zueinander beabstandeten Innenkonturen an das festzuklemmende Kleinteil 1' angepaßt sind, dieses formschlüssig übergreifend in einer Kammer 20 aufnehmen und quer zu ihrer Federrichtung eine durchgängig offene laterale Zugangs- und Ausgangsöffnung 6a, 6b zum Einoder Ausschieben des Werkstücks 1' bilden (vergl. Fig. 11 und 12). Im einzelnen ist der Mittelteil 5.2 des Transportschiffchens 5' von einem metallischen, vorzugsweise aus Stahl gefrästen Spannzangenkörper gebildet, der auswechselbar mit einem blockförmigen Fußteil 5.1 verbunden, insbesondere - wie dargestellt - verschraubt ist. Die hierzu verwendete Schraube ist mit 21 bezeichnet. Der Fußteil 5.1 ist bodenseitig mit einer ersten Prallplatte 22 aus Kunststoff verkleidet, und auch die beiden Zangenschenkel 5.2a, 5.2b des Spannzangenkörpers 5.2 sind deckseitig mit zweiten Prallplatten 23a, 23b als Kopfteile 5.3 verkleidet, vorzugsweise auswechselbar durch Anschrauben (Befesti-gungsschrauben 24).

Damit dem Transportschiffchen 5' die Eigenschaft eines im Rohrsystem R pneumatisch förderbaren Kolbens verliehen werden kann, ist zwischen dem Fußteil 5.1 und der ersten Prallplatte 22 wenigstens eine über den gesamten Umfang überstehende Dichtlippe 25 eingespannt, welche als Kolbendichtung für das Transportschiffchen 5' mit dem Innenumfang des Rohrsystems R dichtend zur Anlage bringbar ist, vergl. Fig. 10 und Fig. 13.

Die beiden Zangenschenkel 5.2a und 5.2b sind durch Trennfugen 26 von einem Ansatz 5.2c des Mittelteils 5.2 getrennt, so daß sie auf- und zufedern können und so das eingefügte-Werkstück 1' durch Federwirkung sicher halten. Die federelastische Verformbarkeit wird durch die im unteren und mittleren Bereich der Zangenschenkel 5.2a, 5.2b angebrachten hohlzylindrischen, parallalel zur y-Richtung verlaufenden Längsaussparungen 27 noch verbessert, die zugleich die Kerbbeanspruchung minimieren. Aus Fig. 10 erkennt man auch deutlicher als in Fig. 2 und 3 zwei in Querrichtung y nebeneinanderliegende Fixierbohrungen 9 im Ansatz 5.2c, in welche je ein Fixierdorn A2 der Schiebevorrichtungen A01, A02 (Fig. 2 und 3) einfahrbar sind.

Das Transportschiffchen 5" nach Fig. 14 bis 17, konfiguriert zum Transport einer Schweißmutter 1", entspricht in seinem Aufbau grundsätzlich dem Transportschiffchen 5' nach Fig. 10 bis 13, gleiche Teile tragen deshalb auch die gleichen Bezugszeichen. Wegen der kürzeren Bauform der Schweißmutterl" ist der Ansatz 5.2c des Mittelteils 5.2 verlängert, so daß er eine Transportfläche für die Schweißmutter bildet. Außerdem sind die beiden Fixierbohrungen 9, 9 in x-Richtung zueinander benachbart, so daß sie wieder etwa im Schwerpunktsbereich des Ansatzes 5.2c (wie beim Transportschiffchen 5') liegen. - Fig. 16 zeigt den praktisch viereckigen Innen- und Außenquerschnitt des Rohrsystems R (mit abgerundeten inneren und äußeren Ecken), in welchem das Transportschiffchen 5" bzw. 5, 5' unter Einhaltung eines umlaufenden Bewegungsspaltes 28 mit seiner Dichtlippe 25 an seinem Außenumfang pneumatisch in Richtung ±x gefördert werden kann.

Fig. 18 und 19 zeigen den Mündungsbereich M2 des Rohrsystems R, und zwar einen Ausschnitt des Übergabe-Bereichs U2, wobei das Transportschiffchen 5", beladen mit einer Schweißmutter 1", in zwei verschiedenen Positionen A (Fig. 18) und B (Fig. 19) innerkalb des Mündungsbereiches M2 dargestellt ist. Den zwei Positionen A, B des Transportschiffchens 5" entsprechen die zwei Positionen A, B des Kolbens C1 der pneumatischen Steuereinrichtung C02, von der außer ihrem hervorschauenden Kolben C1 das Gehäuse C2 nur mit seinen Umrissen dargestellt ist. An der Stirnseite des Kolbens C1 ist ein Gummipuffer C3 befestigt, welcher zusätzlich zur pneumatischen Dämpfung oder Abbremsung des Transportschiffchens 5" eine Aufschlagdämpfung durch elastische Verformung gewirkt Außerdem ist der Kolben C1 mit einer umlaufenden Dichtlippe 31 an seinem Außenumfang versehen, welche den Ringspalt zwischen Kolben C1 und dem Innenumfang der Rohrmündung m2 nach außen abdichtet. (A) ist die Ankunftsposition des Transportschiffchens 5", nachdem es nach seinem Auftreffen auf den Gummipuffer C3 zur Ruhe gekommen ist. Die Position A ist zugleich die Entlade- und Beladeposition des Transportschiffchens 5", in welcher seine läteralen Zugangs- und Ausgangsöffnungen 6a, 6b mit den beiden Fensteröffnungen F21, F22 fluchten.

In der Position A kann das Werkstück 1" durch die hier nicht dargestellte Schiebevorrichtung (vergl. Fig. 3) entladen werden. In Position A kann in Richtung +x ankommende Blasluft BL1 über (F21), (F22) entlüftet werden, weil sich die Dichtlippe 25 noch vor den Fensteröffnungen F21, F22 befindet. Will man das Transportschiffchen 5" absenden, dann wird es mit dem Kolben Clin Richtung -x in die Position B verfahren (siehe Fig. 19)und damit abgedichtet, weil die Kolbendichtung 31 das Entweichen von Blasluft nach außen verhindert. Statt der Blasluft BL1 wird jetzt durch die Druckluftbohrung 30 in Richtung -x schuberzeugende Blasluft BL2 in die Kammer zwischen Dichtlippe 25 und Kolbendichtung 31 geschickt und damit das Transportschiffchen 5" abgesandt.

Der pneumatische Bremsvorgang bei der Ankunft des Transportschiffchens 5" wird dadurch eingeleitet, daß das Transportschiffchen 5" bei Bewegung in Richtung +x mit seiner Dichtlippe 25 die Fensteröffnungen F21, F22 passiert, so daß die Blasluft BL1 durch die genannten Öffnungen entweichen kann und ihr Schub schlagartig abfallt. Auf dem letzten Stück bildet sich ein abdämpfendes, sich zeitverzögert abbauendes Luftpolster zwischen der Prallplatte 22 und dem Gummipuffer C3, weil die Entlüftungsbohrung 29 als Drossel für die entweichende Luft wirkt.

Das anhand der Fig. 18 und 19 für die Übergabe-Station U2 Gesagte gilt sinngemäß auch für die Übernahme-Station U1.

Der Querschnitt nach Fig. 20 zeigt zusätzlich zu Fig. 16 die seilichen Fensteröffnungen F21, F22 im Mündungsbereich M2 des Rohrsystems R.

Aus den bisherigen Erläuterungen ergibt sich, daß mit dem Handhabungsgerät HG ein Handhabungsverfahren zum positionsgenauen Transportieren eines Werkstücks, vorzugsweise eines Werkstück-Kleinteiles, wie einer Schraube, Scheibe, Mutter oder dergl., von einer Übernahme-Station U1 über einen Transportweg T zu einer Übergabe-Station U2, verwirklichbar ist, bei dem Gebrauch gemacht wird von der bei Rohrpostanlagen bekannten pneumatischen Forderung durch ein Rohrsystem mittels Druck- oder Saugbeaufschlagung einer kolbenartigen Transportbüchse, welche an einer Aufgabestation mit dem zu fördernden Gut beschickt und aus welcher an einer Empfangsstation das geförderte Gut entnommen wird, wobei durch das Rohrsystem eine von der Aufgabestation zur Empfangsstation bzw. umgekehrt weisende Tranportrichtung definiert wird, und zwar in folgender erfindungsfunktionell individualisierter Form (vergl. Fig. 1 bis 3 sowie Fig. 10 bis 20).

Die Transportbüchse ist ein mit seinem Außenprofil vieleckiges Transportschiffchen 5 5' 5" mit wenigstens einem Fuß- und einem Mittelteil 5.1, 5.2, wobei der Mittelteil 5.2 mit je einer lateralen Zugangs- und Ausgangsöffnung 6a, 6b seitlich offen und mit einer internen Werkstück-Haltevorrichtung derart ausgebildet ist, daß in einer Übernahme-Position P1, bei der sich das Transportschiffchen 5, 5', 5 " im Eingriffsbereich der Übernahme-Station U1 und in einem ersten Mündungsbereich M1 des Rohrsystems R befindet, wenigstens ein Werkstück 1, 1', 1" quer zur Transportrichtung x des Rohrsystems R in das Transportschiffchen 5, 5' 5" einfügbar und in diesem transportgerecht arretierbar ist, bzw. in einer Übergabe-Position P2, bei der sich das Transportschiffchen 5, 5', 5" im Eingriffsbereich der Übergabe-Station U2 und in einem zweiten Mündungsbereich M2 des Rohrsystems R befindet, wenigstens ein Werkstück 1, 1', 1" quer zur Transportrichtung x des Rohrsystems R aus dem Transportschiffchen 5, 5', 5" entnehmbar und einer Bearbeitungsstation BS zuführbar ist. Bei der Rückführung eines leeren Transportschiffchens 5, 5', 5" spielen sich die Sende- und Empfangsvorgänge in umgekehrter Reihenfolge ab (Absendung an der Übergabe-Station U2, Rücksendung des leeren Transportschiffchens in Richtung -x und Empfang an der Übernahme-Station U1).

Zur Verdrehsicherung des Transportschiffchens 5, 5', 5" während des Übernahme-, Transport- und Übergabevorganges ist das Rohrsystem R mit seinem Innenprofil an das polygonale Außenprofil des Transportschiffchens 5, 5', 5" angepaßt, und es ist in seinem ersten Mündungsbereich M1 mit mindestens einer seitlichen Fensteröffnung F1, vorzugsweise deren zwei (F1, F2), sowie in seinem zweiten Mündungsbereich M2 mit mindestens zwei seitlichen Fensteröffnungen F21, F22 versehen, mit welcher bzw. welchen die lateralen Zugangsöffnungen 6a, 6b des Transportschiffchens 5, 5', 5" in dessen Übernahme- oder Übergabe-Position P1, P2 zur Deckung gebracht werden.

Wie es insbesondere Fig. 18 und 19 zeigen, wird das im ersten oder zweiten Mündungsbereich M1, M2 des Rohrsystems ankommende Transportschiffchen 5, 5', 5 " durch stoßdämfende pneumatische und mechanische Mittel F1, F2, F21, F22, 25, 29, 31, C3 abgebremst. Dabei wird das im ersten oder zweiten Mündungsbereich M1, M2 des Rohrsystems R sich befindende Transportschiffchen 5, 5', 5" vor dem Absenden zunächst in Transportrichtung x in eine abgedichtete Sendeposition B verschoben und ihm dann die Blasluft BL2 (bzw. BL1) zugeführt.

Wie es insbesondere Fig. 2 und 3 verdeutlichen, wird im Bereich der Übernahme-Station U1 jeweils das von einer Vereinzel- und Greifvorrichtung 4 vereinzelt zugeführte Werkstück 1, 1', 1" mit einem an dieses angepaßten Schieber A1 quer zur Transportrichtung x durch die seitliche Fensteröffnung F1 und die laterale Zugangsöffnung 6a hindurch in das im Eingriffsbereich der Übernahme-Station U1 sich befindende Transportschiffchen 5, 5', 5" geschoben bzw. wird im Bereich der Übergabe-Station U2 jeweils das Werkstück 1, 1', 1" mit einem an dieses angepaßten Schieber A1 quer zur Transportrichtung x durch die laterale Zugangsöffnung 6b und die seitliche Fensteröffnung F22 aus dem im Eingriffsbereich der Übergabestation U2 sich befindenden Transportschiffchen 5, 5', 5" heraus und in den Eingriffsbereich einer Verarbeitungsstation VS oder dergl. geschoben.

Geht man davon aus, daß das Transportschiffchen 5, 5', 5" bzw. - im beladenen Zustand - Transportschiffchen und Werkstück 1, 1', 1" in einer transportbereiten Startposition jeweils eine in Transportrichtung x weisende Innenseite und eine in die entgegengesetzte Richtung weisende Außenseite haben, so kann gemäß einem weiteren Verfahrensmerkmal das Transportschiffchen 5, 5', 5" auf seinem Weg von der Übernahme-Station U1 zur Übergabe-Station U2 bzw. umgekehrt entweder
a) über eine Zwischenweiche Z1, Z2, Z3, Z4 gefuhrt werden, innerhalb welcher die Orientierung bzw. der Durchlaufsinn des Transportschiffchens und des in ihm gegebenenfalls enthaltenen Werkstücks 1, 1', 1" umgekehrt werden, so daß Innen- und Außenseite der Startposition jeweils identisch sind mit Innen- und Außenseite der Ankunftsposition, oder
b) direkt über das Rohrsystem, d.h. ohne Zwischenweiche, geführt werden, so daß die Innenseite der Startposition zur Außenseite der Ankunftsposition und die Außenseite der Startposition zur Innenseite der Ankunftspositon werden.

Von der vorerwähnten Voraussetzung ausgehend, daß das Transportschiffchen 5, 5', 5" bzw. - im beladenen Zustand - Transportschiffchen und Werkstück 1, 1', 1" in einer transportbereiten Startposition jeweils eine in Transportrichtung weisende Innenseite und eine in die entgegengesetzte Richtung weisende Außenseite haben, kann auch im Bereich der Übernahme-Station U 1 das Werkstück 1, 1', 1"-über Kopf in das Transportschiffchen 5, 5', 5" eingefügt werden, so daß im Vergleich zur Startposition bei der Ankunftsposition Innen-und Außenseite des Werkstücks miteinander vertauscht sind und die Ankunftsposition des Werkstücks einer gewünschten Verarbeitungsposition entspricht.

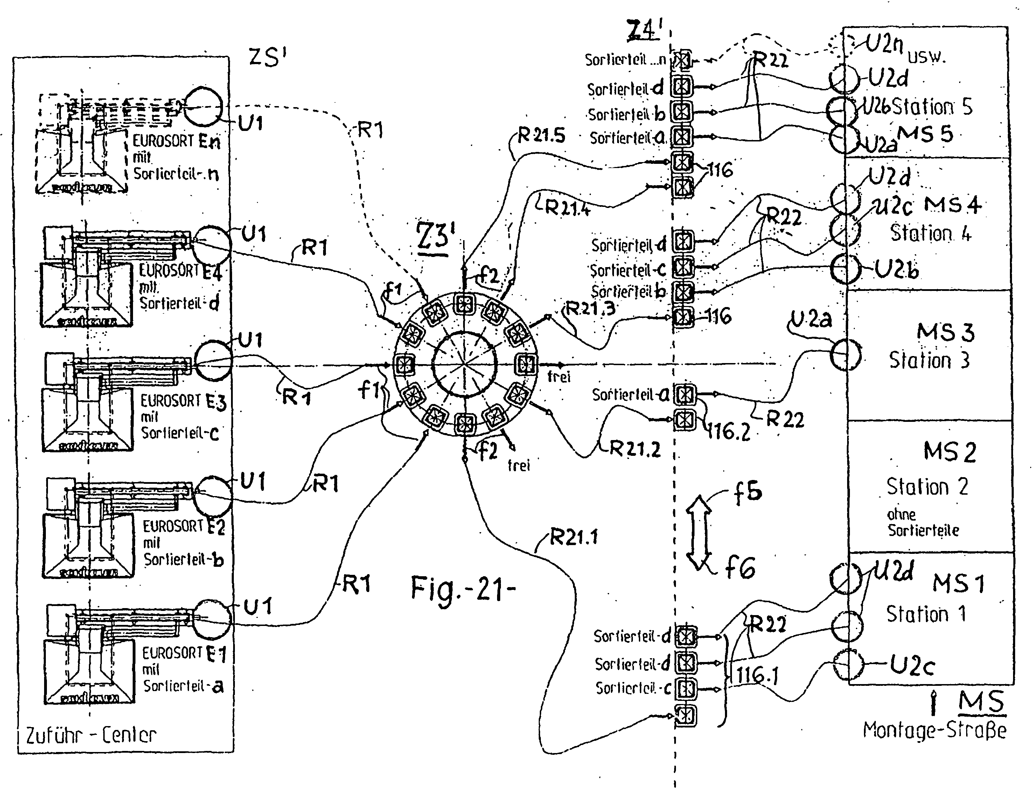

Abschließend seien noch einige Vorteile der Erfindung erläutert. Das Vieleck- oder Vierkant-Rohrprofil kann immer gleich bleiben, weil den unterschiedlichen Werkstückformen durch angepaßte Transportschiffchen Rechnung getragen werden kann, die jedoch immer mit ihren Außenabmessungen in das Rohrprofil passen. Die unterschiedliche Beladung der Transportschiffchen (Schrauben, Muttern, Scheiben,Schweißmuttern, Einpreßmuttern u.s.w.) kann durch eine entsprechende Codierung außen auf dem Transportschiffchen markiert werden, die durch eine z.B. induktive Abfrageeinrichtung im Bereich der Zwischenweichen Z1 - Z4 gelesen werden kann, wodurch die Zwischenweichen in dem Sinne steuerbar ausgebildet werden können, daß sie die unterschiedlich beladenen Transportschiffchen zu unterschiedlichen Übergabe-Stationen leiten. Dies ist in Fig. 21 illustriert.

Dort ist im linken Teil der Fig. dargestellt: ein Zuführsystem ZS', das mehrere parallel arbeitende Stufensortierer des Typs EUROSORT ® (vergl. Fig. 1) umfaßt, und zwar (E1) für Sortierteil a, (E2) für Sortierteil b, (E3) für Sortierteil c, (E4) für Sortierteil d. D.h. die Stufensortieren entnehmen ihrem Schüttgutbunker jeweils nur die vorbstimmten Sortierteile. Mit dem weiteren Stufensortierer En für Sortierteil n ist angedeutet, daß die Anzahl der Stufensortierer des Zuführsystems ZS' noch vergrößert werden kann. Unter Sonierteilen werden verschiedene Werkstück-Kleinteile, wie Schrauben, Scheiben, normale Muttern, Einschweißmuttern etc. verstanden.

Von den Stufensortierern E1...En gelangen die Sortierteile a...n an den Übergabe-Stationen U1, die hier nur schematisch durch kleine Kreise angedeutet sind, in ihre (nicht ersichtlichen) Transportschiffchen, und diese werden über die ersten oder Übernahme-Rohrabschnitte R1 in die Aufnahmekörper 112 der Zwischenweiche Z3'in Form eines Revolver-Drehmoduls, wie durch Pfeile f1 symbolisiert, eingeblasen. Die Transportschiffchen sind entsprechend dem in ihnen enthaltenen Sortierteil codiert, und ihre Codierung ist mittels Leseeinrichtungen der Zwischenweiche Z3' lesbar. Gemäß der gelesenen Information dreht sich nur der Drehteller 15' der Zwischenweiche Z3' schrittweise um soviel Drehschritte, bis der betreffende Aufnahmekörper 112 von seiner Aufnahme-Position 112' in eine Abgabeposition 113' (jetzt als Aufnahmekörper 113) gelangt, bei der er einer Rohrmündung eines solchen Rohrabschnittes R21 gegenübersteht, daß der Sortierteil demjenigen Aufnahmekörper 116 einer weiteren Zwischenweiche Z4' in Form eines Schiebemoduls zuleitbar ist, welcher zu einer diesen Sortierteil verlangenden Montagestation MS1....MS5 gehört bzw. über einen Rohrabschnitt R22 daran angeschlossen ist. Z.B. sei der Aufnahmekörper 113.1 der Zwischenweiche Z3' mit einem Sortierteil c beladen. Die Momentaufnahme der Fig. 21 zeigt in diesem Falle, daß er vor der Mündung des "richtigen" Rohrabschnitts R21. 1 steht, weil letzterer mit der Gruppe 116.1 der Aufnahmekörper 116 verbindbar ist, die nur Sortierteile c und d übernimmt. Durch Verschiebung der Zwischenweiche Z4' in Richtung f5 um einen Teilungsschritt kann der Sortierteil c über den Rohrabschnitt R22 der Übergabestation U2c und damit der Montagestation MS1 zugeführt werden.

Der Rohrabschnitt R21.2 ist zuständig für den Weitertransport der Sortierteile a zur Montagestation MS3 und würde beschickt werden, wenn der Aufnahmekörper 113.2 der Zwischenweiche Z3' einen Sortierteil a enthielte. Der Rohrabschnitt R21.3 ist zuständig für den Weitertransport der Sortierteile des Typs b, c, d, zur Montagestation MS4, die Rohrabschnitte R21.4 und R21.5 sind vorgesehen für den Weitertransport der Sortierteile des Typs a, b, d, n zur Montagestation MS 5. Die generell mit U2 bezeichneten und ebenfalls nur schematisch durch Kreise angedeuteten Übergabe-Stationen sind im einzelnen mit U2a, U2b, U2c, U2d, U2n bezeichnet, um damit zum Ausdruck zu bringen, für welche Sortierteile sie vorgesehen sind. Die einzelnen Montagestationen MS1 bis MS5 bilden eine Montagestraße MS oder allgemein eine Verarbeitungsstation.

Das Zuführsystem oder der Zuführ-Center ZS' kann separat zum und unabhängig vom Aufstellort der Montagestraße MS bzw. der Verarbeitungsstation aufgestellt werden. Die Sortierteile müssen also nicht direkt an der Montagestraße gebunkert und beladen werden. Die Flexibilität des Verteilungssystems nach Fig. 21 wird praktisch nur durch die erforderliche Taktzeit der Verarbeitungsstation MS begrenzt. Im Verteilungssystem nach Fig. 21 können entsprechende Reserveplätze eingeplant werden, z.B. die noch nicht benutzte Montagestation MS2, damit Sortierteile, die im Augenblick noch nicht bekannt sind, ohne große Umrüstungen von der Verarbeitungsstation bzw. Montagestraße MS gefahren werden können.

### Bezugszeichenliste

- HG: Handhabungsgerät
- B1: Fundament
- 1: Werkstück
- U1: Übernahme-Station
- T: Transportweg
- U2: Übergabe-Station
- R: Rohrsystem
- M1: erster Mündungsbereich
- M2: zweiter Mündungsbereich
- F1, F2: seitliche Fensteröffnung
- F21, F22: Fensteröffnungen, weitere
- ZS: Zuführsystem
- 2: schiefe Ebene
- 3: Schüttgut-Bunker
- 4: Vereinzel- und Greifvorrichtung
- A01: Schiebevorrichtung
- A1: Schieber von (A01)
- x: Transportrichtung
- y: Flucht quer zu (x)
- 5: Transportschiffchen oder Kleinteileträger
- 5.1: Fußteil von (59
- 5.2: Mittelteil von (5)
- 5.3: Kopfteil von (5)
- 6a: laterale Zugangsöffnung
- 6b: laterale Ausgangsöffnung
- P1: Übernahme-Position
- P2: Übergabe-Position
- VS: Verarbeitungsstation
- 7: Schrauber
- 8: Plattform
- 10: Rohr-Flanschring
- A02: Schiebevorrichtung, weitere
- A2: Fixierdorn
- 9: Fixierbohrung
- A3: Gehäuse von (A01, A02)
- A4: Traverse
- C01, C02: Steuereinrichtungen, pneumatische
- C1: Steuer- und Bremskolben
- Z1: Rohr-Zwischenweiche
- R3: Rohrstück
- 11: Aufnahmekörper
- 11a: freies Ende von (11)
- 11b: Schwenkende von (11)
- P3, P4: Schwenkstellungen
- m1: Mündung von (R1)
- m2: Mündung von (R2)
- 12: Schwenkantrieb
- 13: Schwenkachse
- BL: Blasluft
- Z2: Rohr-Zwischenweiche, weitere
- 14: Drehantrieb
- 15: Drehteller
- 110, 111: Aufnahmekörper, weitere
- 16: Drehachse
- C03, C04: pneumat. Steuereinrichtungen, weitere
- Z3: Rohr-Zwischenweiche
- 14': Drehantrieb, weiterer
- 15': Drehteller, weiterer
- 112, 113: Aufnahmekörper, weitere
- 16': Drehachse von (15')
- 17: Drehwinkelschritt
- 112': Position
- f1: Richtungspfeil
- f2: Richtungspfeil, weiterer
- Z4:: Rohr-Zwischenweiche, weitere
- 114, 115: Aufnahmekörper, weitere
- 18: Schiebemodul
- z: Längsflucht
- f3, f4: Richtungspfeile, weitere
- 19: Teilungsschritt
- 114': Position
- 115': Entladepositionen
- 1': Werkstück, weiteres (Schraube)
- 5': Transportschiffchen, weiteres
- 5.2a, 5.2b: Zangenschenkel
- 20: Kammer
- 21: Doppelkopfschraube
- 22: Prallplatte
- 23a, 23b: Prallplatten, kopfseitig
- 24: Befestigungsschrauben
- 25: Dichtlippe
- 26: Trennfugen
- 5.2c: Ansatz von (5.2)
- 27: Längsaussparungen
- 5": Transportschiffchen, weiteres
- 1": Werkstück, weiteres (Schweißmutter)
- 28: Bewegungsspalt
- 31: Kolbendichtung
- A, B, C: Positionen
- C2: Gehäuse
- C3: Gummipuffer
- 29: Entlüftungsbohrungen
- 30: Druckluftbohrung
- BL1: Blasluft in Richtg. +x
- BL2: Blasluft in Richtg. -x
- ZS': Zuführsystem, weiteres
- E1...E4: Stufensortierer
- En: Stufensortierer, weiterer
- a...d, n: Sortierteile
- Z3': Zwischenweiche, weit.
- 113': Abgabeposition
- R21: Rohrabschnitte, allg.
- R21.1-R21.5: Rohrabschnitte i. einz.
- Z4': Zwischenweiche, weit.
- 116: Aufnahmekörper von (Z4') allgemein
- 116.1, 116.2: Aufnahmekörpergruppen
- U2a...U2d,: Übergabe-Stationen im
- U2n: einzelnen
- MS1...MS5: Montagestationen
- MS: Montagestraße

## Patentansprüche

1. Handhabungsverfahren zum positionsgenauen Transportieren eines Werkstücks (1, 1', 1")), vorzugsweise eines Werkstück-Kleinteiles, wie einer Schraube, Scheibe, Mutter oder dergl., von einer Übernahme-Station (U1) in Transportrichtung (x) über einen Transportweg zu einer Übergabe-Station (U2) bzw. umgekehrt, mit pneumatischer Förderung durch ein Rohrsystem ( R ) mittels Druck- oder Saugbeaufschlagungeines Werkstückträgers, welcher in einer Übernahme-Position (P1), bei der er sich im Eingriffsbereich der Übernahme-Station (U1) des Rohrsystems ( R ) befindet, quer zur Transportrichtung (x) mit wenigstens einem Werkstück (1) beladen wird, und von welchem in einer Übergabe-Position (P2), in welcher der Werkstückträger sich im Eingriffsbereich der Übergabe-Station (U2) des Rohrsystems ( R ) befindet, das wenigstens eine Werkstück (1, 1', 1")) entnommen und einer Verarbeitungs-Station (VS) zugeführt wird,
**gekennzeichnet durch** die folgenden Merkmale:
a) der Werkstückträger ist nach Art einer Transportbüchse, jedoch als ein mit seinem Außenprofil vieleckiges Transportschiffchen (5, 5', 5") mit wenigstens einem Fuß- und einem Mittelteil (5.1, 5.2) ausgebildet, wobei der Mittelteil (5.2) mit je einer lateralen Zugangs- und Ausgangsöffnung (6a, 6b) seitlich offen und mit einer internen Werkstück-Haltevorrichtung versehen ist;
**b)** zur Verdrehsicherung des Transportschiffchens (5, 5', 5") während des Übernahme-, Transport- und Übergabevorganges ist das Rohrsystem ( R ) mit seinem Innenprofil an das polygonale Außenprofil des Transportschiffchens angepaßt und in einem ersten Mündungsbereich (M1) mit mindestens einer seitlichen Fensteröffnung (F1), vorzugsweise deren zwei, sowie in einem zweiten Mündungsbereich (M2) mit mindestens zwei seitlichen Fensteröffnungen (F21, F22) versehen, mit welcher bzw. welchen die lateralen Zugangsöffnungen (6a, 6b) des Transportschiffchens (5, 5', 5") in dessen Übernahme- oder Übergabe-Position (P1, P2) zur Deckung gebracht werden.

2. Handhabungsverfahren nach Anspruch 1, wobei das Transportschiffchen (5, 5', 5") bzw. - im beladenen Zustand - Transportschiffchen und Werkstück (1, 1', 1") in einer transportbereiten Startposition jeweils eine in Transportrichtung weisende Innenseite und eine in die entgegengesetzte Richtung weisende Außenseite haben, **dadurch gekennzeichnet, daß** das Trans-portschiffchen (5, 5', 5") auf seinem Weg von der Übernahme-Station (U1) zur Übergabe-Station (U2) bzw. umgekehrt entweder
a) über eine Zwischenweiche (Z1...Z4) geführt wird, innerhalb welcher die Orientierung bzw. der Durchlaufsinn des Transportschiffchens (5, 5', 5") und des in ihm gegebenenfalls enthaltenen Werkstücks (1, 1', 1") umgekehrt werden, so daß Innen- und Außenseite der Startposition jeweils identisch sind mit Innen- und Außenseite der Ankunftsposition, oder
b) direkt über das Rohrsystem (R), d.h. ohne Zwischenweiche, geführt wird, so daß die Innenseite der Startposition zur Außenseite der Ankunftsposition und die Außenseite der Startposition zur Innenseite der Ankunftspositon werden.

3. Handhabungsverfahren nach Anspruch 1, wobei das Transportschiffchen (5, 5', 5") bzw. - im beladenen Zustand - Transportschiffchen und Werkstück (1) in einer transportbereiten Startposition jeweils eine in Transportrichtung weisende Innenseite und eine in die entgegengesetzte Richtung weisende Außenseite haben, **dadurch gekennzeichnet, daß** im Bereich der Übernahme-Station (U1) das Werkstück (1, 1', 1") über Kopf in das Transportschiffchen (5, 5', 5") eingefügt wird, so daß im Vergleich zur Startposition bei der Ankunftsposition Innen-und Außenseite des Werkstücks miteinander vertauscht sind und die Ankunftsposition des Werkstücks einer gewünschten Verarbeitungsposition entspricht.

4. Handhabungsverfahren nach einem der Ansprüche 1 bis 3, **dadurch gekennzeichnet, daß** das im ersten oder zweiten Mündungsbereich (M1, M2) des Rohrsystems ( R ) ankommende Transportschiffchen (1, 1', 1") durch stoßdämfende pneumatische und mechanische Mittel abgebremst wird.

5. Handhabungsverfahren nach einem der Ansprüche 1 bis 4, **dadurch gekennzeichnet, daß** das im ersten oder zweiten Mündungsbereich (M1, M2) des Rohrsystems ( R ) sich befindende Transportschiffchen (5, 5', 5") vor dem Absenden zunächst in Transportrichtung (x) in eine abgedichtete Sendeposition (B) verschoben und ihm dann die Blasluft (BL1, BL2) zugeführt wird.

6. Handhabungsverfahren nach einem der Ansprüche 1 bis 5, **dadurch gekennzeichnet, daß** im Bereich der Übernahme-Station (U1) jeweils das von einer Vereinzelund Greifvorrichtung (4) vereinzelt zugeführte Werkstück (1, 1', 1") mit einem an dieses angepaßten Schieber (A1) quer zur Transportrichtung (x) durch die seitliche Fensteröffnung (F1, F21) und die laterale Zugangsöffnung (6a) hindurch in das im Eingriffsbereich der Übernahme-Station (U1) sich befindende Transportschiffchen (5, 5', 5") geschoben wird bzw. im Bereich der Übergabe-Station (U2) jeweils das Werkstück mit einem an dieses angepaßten Schieber (A1) quer zur Transportrichtung (x) durch die laterale Zugangsöffnung (6b) und die seitliche Fensteröffnung (F22) aus dem im Eingriffsbereich der Übergabestation (U2) sich befindenden Transportschiffchen (5, 5', 5") heraus und in den Eingriffsbereich einer Verarbeitungsstation (VS) oder dergl. geschoben wird.

7. Handhabungsgerät zur Durchführung des Verfahrens nach einem der Ansprüche 1 bis 6, **gekennzeichnet durch** die folgenden Merkmale:
**a)** das jeweils eine Übernahme-Station (U1) in einem ersten Mündungsbereich (M1) und eine Übergabe-Station (U2) in einem zweiten Mündungsbereich (M2) umfassende und sich zwischen beiden Bereichen erstreckende Rohrsystem ( R ) weist ein vieleckiges Innenprofil auf und ist in seinem ersten Mündungsbereich (M1) mit mindestens einer seitlichen Fensteröffnung (F1), vorzugsweise deren zwei, sowie in seinem zweiten Mündungsbereich (M2) mit mindestens zwei seitlichen Fensteröffnungen (F21, F22) versehen,
**b)** das mit einem vieleckigen Außenprofil an das Innenprofil des Rohrsystems ( R ) angepaßte Transportschiffchen (5, 5', 5") besteht zumindest aus einem Fuß- und einem Mittelteil (5.1, 5.2), wobei der Mittelteil (5.2) mit wenigstens einer lateralen Zugangs- und Ausgangsöffnung (6a, 6b) seitlich offen und mit einer internen Werkstück-Haltevorichtung derart ausgebildet ist, daß
b1) das Transportschiffchen (5, 5', 5") in einer Übernahme-Position (P1), bei der es sich im Eingriffsbereich der Übernahme-Station (U1) und im ersten Mündungsbereich (M1) des Rohrsystems ( R ) befindet, mit seiner lateralen Zugangsöffnung (6a) zur Deckung bringbar ist mit der seitlichen Fensteröffnung (F1) des ersten Mündungsbereiches (M1) und so wenigstens ein Werkstück (1, 1', 1 ") quer zur Transportrichtung x) des Rohr systems ( R ) in das Transportschiffchen (5, 5', 5") einfügbar und in diesem transportgerecht arretierbar ist, bzw.
b2) das Transportschiffchen (5, 5', 5") in einer Übergabe-Position (P2), bei der es sich im Eingriffsbereich der Übergabe-Station (U2) und im zweiten Mündungsbereich (M2) des Rohrsystems ( R ) befindet, mit seiner lateralen Zugangs- und Ausgangsöffnung (6a, 6b) zur Deckung bringbar ist mit den beiden seitlichen, einander gegenüberliegenden Fensteröffnungen (F21, F22) des zweiten Mündungsbereiches (M2) und so wenigstens ein Werkstück (1, 1', 1") quer zur Transportrichtung (x) des Rohrsystems ( R ) aus dem Transportschiffchen (5, 5', 5") entnehmbar und einer Verarbeitungsstation (VS) zuführ bar ist.

8. Handhabungsgerät nach Anspruch 7, **dadurch gekennzeichnet, daß** das Innenprofil des Rohrsystems ( R ) und das daran angepaßte Außenprofil des Transportschiffchens (5, 5', 5") vierkantig, insbesondere im wesentlichen quadratisch, sind.

9. Handhabungsgerät nach Anspruch 7 oder 8, **dadurch gekennzeichnet, daß** das Transportschiffchen (5, 5', 5") als federnde Spanzange zum form- und kraftschlüssigen Ein- bzw. Ausclipsen des jeweiligen Werkstücks (1, 1', 1") ausgebildet ist, mit zwei federelastisch deformierbaren Zangenschenkeln (5.2a, 5.2b), die mit ihren zueinander beabstandeten Innenkonturen an das festzuklemmende Werkstück-Kleinteil, z.B. Schraubenbolzen (1'), Mutter (1), angepaßt sind, dieses formschlüssig übergreifend in einer Kammer (20) aufnehmen und quer zu ihrer Federrichtung eine durchgängig offene laterale Zugangsöffnung (6a, 6b) zum Ein- oder Ausschieben des Werkstücks (1, 1', 1") bilden.

10. Handhabungsgerät nach einem der Ansprüche 7 bis 9, **dadurch gekennzeichnet, daß** der Mittelteil (5.2) des Transportschiffchens (5, 5', 5") von einem Spannzangenkörper gebildet ist, der auswechselbar mit einem blockförmigen Fußteil (5.1) verbunden, insbesondere verschraubt, ist.

## Claims

1. A handling method for the positionally accurate transportation of a work piece (1, 1', 1"), preferably a work piece hardware part - such as a screw, washer, nut or the like - from a take-over station (U1) in transport direction (x) via a transport path to a delivery station (U2) and vice-versa, respectively, by way of a pneumatic conveyance through a tubular system (R) by means of pressure or suction application onto a work piece carrier which is loaded - transversely to the transport direction (x) - with at least one work piece (1) in a take-over position (P1) in which it is located in the manipulation area of the take-over station (U1) of the tubular system (R), and from which the minimum one work piece (1, 1', 1") is removed in a delivery position (P2) in which the work piece carrier is located in the manipulation area of the delivery station (U2) of the tubular system (R), said work piece being fed to a processing station (VS),
**characterized by** the following features:
a) the work piece carrier is designed along the lines of a transport box; however, designed as a transport shuttle (5, 5', 5") polygonal in its outside profile and with at least one foot and one center part (5.1, 5.2), the center part (5.2) being open on the side with one lateral entry and exit opening (6a, 6b) each and provided with an internal work piece holding device;
b) as an anti-rotational measure for the transport shuttle (5, 5', 5") during the take-over, transport, and delivery action, the tubular system (R) is adjusted with its inside profile to the polygonal outside profile of the transport shuttle and provided in a first orifice area (M1) with at least one lateral window opening (F1), preferably two of them, as well as in a second orifice area (M2) with at least two lateral window openings (F21, F22) which are made to match congruently the lateral access openings (6a, 6b) of the transport shuttle (5, 5', 5") in its take-over or delivery position (P1, P2).

2. A handling method according to Claim 1 wherein the transport shuttle (5, 5', 5") - or, respectively, in loaded condition, the transport shuttle and work piece (1, 1', 1") - will have, in a starting position ready for transport, one inside each facing in the direction of transport, and one outside each facing into the opposite direction, **characterized in that** the transport shuttle (5, 5', 5") - on its way from the take-over station (U1) to the delivery station (U2) and, respectively, vice versa - will either
a) be guided via an intermediate shunt (Z1...Z4) within which the orientation or, respectively, the passage sense of the transport shuttle (5, 5', 5") and the work piece (1, 1',1") possibly included therein, may be reversed so that the inside and the outside of the starting position will be each identical with the inside and the outside of the arriving position; or
b) be passed directly via the tubular system (R), i.e. without intermediate shunt, such that the inside of the starting position will become the outside of the arriving position, and the outside of the starting position will become the inside of the arriving position.

3. A handling method according to Claim 1 wherein the transport shuttle (5, 5', 5") - and, respectively, in a loaded condition, transport shuttle and work piece (1) - will have, in a starting position ready for transport, one inside facing into the transport direction and one outside facing into the opposite direction, **characterized in that** in the area of the take-over station (U1), the work piece (1, 1', 1") is inserted overhead into the transport shuttle (5, 5', 5") so that in comparison with the starting position, the work piece's inside and outside are switched upon the arriving position, and the arriving position of the work piece is equivalent to a desired processing position.

4. A handling method according to any one of the Claims 1 to 3, **characterized in that** the transport shuttle (1, 1', 1") arriving in the first or second orifice area (M1, M2) of the tubular system (R) is decelerated by means of shock-absorbing pneumatic and mechanical means.

5. A handling method according to any one of the Claims 1 to 4, **characterized in that** the transport shuttle (5, 5', 5") located in the first or second orifice area (M1, M2) of the tubular system (R) is pushed, prior to sending, first into a sealed sending position (B) in transport direction (x), and then it has blow air (BL1, BL2) fed to it.

6. A handling method according to any one of the Claims 1 to 5, **characterized in that** - in the area of the take-over station (U1) - the work piece (1, 1', 1") - each individually fed in the area of the take-over station (U1) by a separator and gripper equipment (4) is pushed with a slide (A1) adapted to it, transversely to the transport direction (x) through the lateral window opening (F1, F21) and through the lateral entry opening (6a) into the transport shuttle (5, 5', 5") being located in the manipulation area of the take-over station (U1), and respectively, the work piece - in the area of the delivery station (U2) - with a slide (A1) adapted to it, transversely to the transport direction (x) through the lateral entry opening (6b) and the lateral window opening (F22) out of the transport shuttle (5, 5', 5"), said work piece being located in the manipulation area of the delivery station (U2) and being pushed into the manipulation area of a processing station (VS) or the like.

7. A handling device for carrying out the method according to any one of the Claims 1 to 6, **characterized by** the following features:
a) The tubular system (R) comprising one take-over station (U1) each in a first orifice area (M1) and a delivery station (U2) in a second orifice area (M2), and said tubular system extending between these two areas features a polygonal inside profile and is provided in its first orifice area (M1) with at least one lateral window opening (F1), preferably two thereof, as well as in its second orifice area (M2) with at least two lateral window openings (F21, F22);
b) the transport shuttle (5, 5', 5") with a polygonal outside profile adapted to the inside profile of the tubular system (R) consists at least of one foot part and one center part (5.1, 5.2) , the center part (5.2) being laterally open with one lateral entry and exit opening (6a, 6b) each and being designed with an internal work piece holding device such that
b1) the transport shuttle (5, 5', 5") in a take-over position (P1) - in which it is located in the manipulation area of the take-over station (U1) and in the first orifice area (M1) of the tubular system (R) - can be made to congruently match its lateral entry opening (6a) with the lateral window opening (F1) of the first orifice area (M1), and thus at least one work piece (1, 1', 1") being insertable, transversely to the transport direction (x) of the tubular system (R), into the transport shuttle (5, 5', 5") and being arrestable therein properly for the transport; and, respectively,
b2) the transport shuttle (5, 5', 5") in a delivery position (P2) - in which it is located in the manipulation area of the delivery station (U2) and in the second orifice area (M2) of the tubular system (R) - can be made to congruently match its lateral entry and exit opening (6a, 6b) with the two lateral window openings (F21, F22) facing each other of the second orifice area (M2), and thus at least one work piece (1, 1', 1") being removable, transversely to the transport direction (x) of the tubular system (R), from the transport shuttle (5, 5', 5") and being feedable to a processing station (VS).

8. A handling device according to Claim 7, **characterized in that** the inside profile of the tubular system (R) and the adapted outside profile of the transport shuttle (5, 5', 5") are tetragonal, especially essentially square.

9. A handling device according to Claims 7 or 8, **characterized in that** the transport shuttle (5, 5', 5") is designed as spring pliers for clipping the corresponding work piece (1,1', 1") in and, respectively, out in a positive locking and force locking manner, with two spring-elastic deformable pliers' legs (5.2a, 5.2b) which are adjusted - with their inside contours spaced apart from each other - to the work piece hardware part to be clamped - e.g. screw bolt (1'), nut (1) - which they take up in a chamber (20) in an overreaching positive lock, and forming - transversely to their spring direction - an integrated open lateral entry and exit opening (6a, 6b) for pushing the work piece (1,1', 1") in or out.

10. A handling device according to any one of the Claims 7 to 9, **characterized in that** the center part (5.2) of the transport shuttle (5, 5', 5") is formed of a body of pliers which is connected replaceably with a block-shaped foot part (5.1), especially screwed.

## Revendications

1. Procédé de manipulation pour le transport précis en position d'une pièce d'oeuvre (1, 1', 1"), de préférence d'une petite partie d'une pièce d'oeuvre, comme une vis, une rondelle, un écrou ou similaires, d'une station de prise en charge (U1) dans la direction de transport (x) à une station de transfert (U2) via un parcours de transport ou inversement, avec un transport pneumatique par un système tubulaire (R) au moyen d'une sollicitation par pression ou aspiration d'un porte pièce, lequel, dans une position de prise en charge (P1) dans laquelle il se trouve dans la zone d'engagement de la station de prise en charge (U1) du système tubulaire (R), est chargé transversalement à la direction de transport (x) avec au moins une pièce d'oeuvre (1), et sur lequel, dans une position de transfert (P2) dans laquelle le porte pièce se trouve dans la zone d'engagement de la station de transfert (U2) du système tubulaire (R), la au moins une pièce d'oeuvre (1, 1', 1") est prélevée et amenée à une station de traitement,
**caractérisé par** les caractéristiques suivantes :
a) le porte-pièce est conçu à la façon d'un manchon de transport, mais comme une navette de transport (5, 5', 5") polygonale avec son profil extérieur avec au moins une partie inférieure et une partie centrale (5.1, 5.2), la partie centrale (5.2) étant ouverte sur le côté avec une ouverture d'accès et une ouverture de sortie latérales (6a, 6b) et étant pourvue d'un dispositif interne de maintien de pièce d'oeuvre ;
b) pour le blocage en rotation de la navette de transport (5, 5', 5") pendant l'opération de prise en charge, l'opération de transport et l'opération de transfert, le système tubulaire (R) est adapté avec son profil intérieur au profil extérieur polygonal de la navette de transport et est pourvu dans une première zone de débouché (M1) d'au moins une ouverture de fenêtre (F1) latérale, de préférence de deux, ainsi que dans une seconde zone de débouché (M2) d'au moins deux ouvertures de fenêtres (F21, F22) latérales, avec laquelle ou lesquelles les ouvertures d'accès (6a, 6b) latérales de la navette de transport (5, 5', 5") sont amenées en recouvrement dans la position de prise en charge ou de transfert (P1, P2) de la navette.

2. Procédé de manipulation selon la revendication 1, la navette de transport (5, 5', 5") ou, dans l'état chargé, la navette de transport et la pièce d'oeuvre (1, 1', 1"), présentent dans une position de démarrage prête pour le transport respectivement un côté intérieur dirigé dans la direction de transport et un côté extérieur dirigé dans la direction opposée, **caractérisé en ce que** la navette de transport (5, 5', 5") est guidée sur son parcours de la station de prise en charge (UI) à la station de transfert (U2) et inversement soit
a) au moyen d'un aiguillage intermédiaire (Z1...Z4), à l'intérieur duquel l'orientation ou le sens de passage de la navette de transport (5, 5', 5") et de la pièce d'oeuvre (1, 1', 1") contenue éventuellement dans la navette sont inversés, de sorte que le côté intérieur et le côté extérieur de la position de démarrage sont respectivement identiques au côté intérieur et au côté extérieur de la position d'arrivée, ou bien
b) est guidée directement par le système tubulaire (R), c'est-à-dire sans aiguillage intermédiaire, de sorte que le côté intérieur de la position de démarrage devient le côté extérieur de la position d'arrivée et le côté extérieur de la position de démarrage le côté intérieur de la position d'arrivée.

3. Procédé de manipulation selon la revendication 1, la navette de transport (5, 5', 5") ou dans l'état chargé, la navette de transport et la pièce d'oeuvre (1) présentent dans une position de démarrage prête pour le transport respectivement un côté intérieur dirigé dans la direction de transport et un côté extérieur dirigé dans la direction opposée, **caractérisé en ce que**, dans la zone de la station de prise en charge (UI), la pièce d'oeuvre (1, 1', 1") est insérée de façon renversée dans la navette de transport (5, 5', 5"), de sorte que, par rapport à la position de démarrage, le côté intérieur et le côté extérieur de la pièce d'oeuvre sont permutés dans la position d'arrivée et la position d'arrivée de la pièce d'oeuvre correspond à une position de traitement souhaitée.

4. Procédé de manipulation selon l'une quelconque des revendications 1 à 3, **caractérisé en ce que** la navette de transport (1, 1', 1") arrivant dans la première ou la seconde zones de débouché (M1, M2) du système tubulaire (R) est freinée par des moyens pneumatiques et mécaniques d'amortissement de choc.

5. Procédé de manipulation selon l'une quelconque des revendications 1 à 4, **caractérisé en ce que** la navette de transport (5, 5', 5") se trouvant dans la première ou la seconde zone de débouché (M1, M2) du système tubulaire (R) est déplacée avant l'envoi d'abord dans la direction de transport (x) dans une position d'envoi (B) rendue étanche et l'air de soufflage (BL1, BL2) lui est ensuite amené.

6. Procédé de manipulation selon l'une quelconque des revendications 1 à 5, **caractérisé en ce que**, dans la zone de la station de prise en charge (U1), respectivement la pièce d'oeuvre (1, 1', 1") amenée individuellement par un dispositif de séparation et de préhension (4) est poussée avec un coulisseau (A1) adapté à cette pièce transversalement à la direction de transport (x) à travers l'ouverture de fenêtre (F1, F21) latérale et l'ouverture d'accès (6a) latérale dans la navette de transport (5, 5', 5") se trouvant dans la zone d'engagement de la station de prise en charge (U1) et, dans la zone de la station de transfert (U2), respectivement la pièce est guidée avec un coulisseau (A1) adapté à la pièce transversalement à la direction de transport (x) à travers l'ouverture d'accès (6b) latérale et l'ouverture de fenêtre (F22) latérale hors de la navette de transport (5, 5', 5") se trouvant dans la zone d'engagement de la station de transfert (U2) et dans la zone d'engagement d'une station de traitement (VS) ou similaire.

7. Appareil de manipulation pour la mise en oeuvre du procédé selon l'une quelconque des revendications 1 à 6, **caractérisé par** les caractéristiques suivantes :
a) le système tubulaire (R) comprenant respectivement une station de prise en charge (U1) dans une première zone de débouché (M1) et une station de transfert (U2) dans une seconde zone de débouché (M2) et s'étendant entre les deux zones présente un profil intérieur polygonal et est pourvu dans sa première zone de débouché (M1) d'au moins une ouverture de fenêtre (F1) latérale, de préférence deux, ainsi que dans sa seconde zone de débouché (M2) d'au moins deux ouvertures de fenêtre (F21, F22) latérales,
b) la navette de transport (5, 5', 5") adaptée avec un profil extérieur polygonal au profil intérieur du système tubulaire (R) comprend au moins une partie inférieure et une partie centrale (5.1, 5.2), la partie centrale (5.2) étant ouverte sur le côté avec au moins une ouverture d'accès et une ouverture de sortie (6a, 6b) latérales et étant réalisée avec un dispositif interne de maintien de pièce d'oeuvre de telle sorte que
b1) dans une position de prise en charge (P1), dans laquelle la navette de transport (5, 5', 5") se trouve dans la zone d'engagement de la station de prise en charge (U1) et dans la première zone de débouché (M1) du système tubulaire (R), cette navette peut être amenée avec son ouverture d'accès latérale (6a) en recouvrement avec l'ouverture de fenêtre latérale (F1) de la première zone de débouché et ainsi au moins une pièce (1, 1', 1") peut être insérée transversalement à la direction de transport du système tubulaire (R) dans la navette de transport (5, 5', 5") et peut être bloquée dans celle-ci de façon adaptée au transport, et
b2) dans une position de transfert (P2), dans laquelle la navette de transport (5, 5', 5") se trouve dans la zone d'engagement de la station de transfert (U2) et dans la seconde zone de débouché du système tubulaire (R), cette navette peut être amenée avec son ouverture d'accès et son ouverture de sortie (6a, 6b) latérales en recouvrement avec les ouvertures de fenêtre (F21, F22) latérales et se faisant face de la seconde zone de débouché (M2) et ainsi au moins une pièce (1, 1', 1") peut être prélevée de la navette de transport (5, 5', 5") transversalement à la direction de transport (x) du système tubulaire (R) et être amenée à une station d'usinage (VS).

8. Appareil de manipulation selon la revendication 7, **caractérisé en ce que** le profil intérieur du système tubulaire (R) et le profil extérieur, adapté à ce profil, de la navette de transport (5, 5', 5") sont quadrangulaires, en particulier sensiblement carrés.

9. Appareil de manipulation selon la revendication 7 ou 8, **caractérisé en ce que** la navette de transport (5, 5', 5") est conçue comme une pince de serrage élastique pour le clipsage et le déclipsage par complémentarité de formes et adhérence de la pièce d'oeuvre (1, 1', 1") respective, avec deux branches de pince (5.2a, 5.2b) pouvant être déformées de façon élastique, qui sont adaptées avec leurs contours intérieurs espacés l'un de l'autre à la petite partie de la pièce d'oeuvre à serrer, par exemple un boulon fileté (1'), un écrou (1), réceptionnent cette pièce par complémentarité de formes et recouvrement dans une chambre (20) et forment transversalement à leur direction de ressort une ouverture d'accès (6a, 6b) latérale et ouverte en continue pour l'entrée ou la sortie par poussée de la pièce d'oeuvre (1', 1").

10. Appareil de manipulation selon l'une quelconque des revendications 7 à 9, **caractérisé en ce que** la partie centrale (5.2) de la navette de transport (5, 5', 5") est formée par un corps de pince de serrage, qui est relié de façon interchangeable avec une partie inférieure (5.1) en forme de bloc, en particulier est vissé.
